# EUROPÄISCHE PATENTSCHRIFT

(11) **EP 2 907 187 B1**
(45) Veröffentlichungstag und Bekanntmachung des Hinweises auf die Patenterteilung: **15.11.2017**
(21) Anmeldenummer: 13759693.8
(22) Anmeldetag: 03.09.2013
(51) Int. Cl.: H01M 8/04014, H01M 8/04029, H01M 8/04119, H01M 8/0432, H01M 8/0612, H01M 8/124, H01M 8/04007, H01M 8/04701, H01M 8/04828

(54) **BRENNSTOFFZELLENSYSTEM AUF DER BASIS VON FESTOXID-BRENNSTOFFZELLEN**
FUEL CELL SYSTEM BASED ON SOLID OXIDE FUEL CELLS
SYSTÈME DE PILES À COMBUSTIBLE À BASE DE PILES À COMBUSTIBLE À OXYDE SOLIDE

(30) Priorität: 12.10.2012 DE 102012020058
(43) Veröffentlichungstag der Anmeldung: 19.08.2015
(73) Patentinhaber: Robert Bosch GmbH, 70442 Stuttgart (DE)
(72) Erfinder: FRIEDE, Wolfgang, 71384 Weinstadt (DE); LIMBECK, Uwe, 73230 Kirchheim Unter Teck (DE)
(86) Internationale Anmeldenummer: PCT/EP2013/068125
(87) Internationale Veröffentlichungsnummer: WO 2014/056660

(56) Entgegenhaltungen:
- EP-A1- 0 818 840
- EP-A1- 0 897 825
- WO-A1-2010/123146
- WO-A1-2013/039022
- JP-A- H0 582 150
- US-A1- 2011 136 026

## Beschreibung

Die Erfindung betrifft ein Brennstoffzellensystem auf der Basis von Festoxid-Brennstoffzellen gemäß Anspruch 1. Ferner betrifft die Erfindung ein Verfahren zum Betreiben eines derartigen Brennstoffzellensystems gemäß Anspruch 9. Brennstoffzellensysteme dienen zur Erzeugung von elektrischer Energie. Zum Betreiben eines Brennstoffzellensystems werden als Brennstoffe unter anderem Kohlenwasserstoffe, z.B. Erdgas, eingesetzt. In einem Reformer erfolgt die Umwandlung des üblicherweise eingesetzten Erdgases in Wasserstoff und Kohlenmonoxid, wobei zur Erzielung eines hohen Wirkungsgrades eine Dampfreformierung durchgeführt wird. In den Brennstoffzellen selber reagieren Wasserstoff und Kohlenmonoxid zu Wasserdampf und Kohlendioxid. Brennstoffzellensysteme sind zur Effizienzsteigerung üblicherweise im Zusammenhang mit einer Kraft-Wärme-Kopplung eingesetzt. Mit Hilfe von Kraft-Wärme-Kopplung erfolgt eine kombinierte Strom- und Wärmeerzeugung, so dass der Energieverbrauch und der CO₂-Ausstoß - verglichen mit einer herkömmlichen separaten Strom- und Wärmeerzeugung - gesenkt werden. Daher gewinnt die Kraft-Wärme-Kopplung auf dem Energiesektor zunehmend an Bedeutung.

Brennstoffzellensysteme weisen häufig Festoxid-Brennstoffzellen (Solid Oxide Fuel Cells, SOFCs) auf. Derartige Brennstoffzellen werden bei Temperaturen zwischen 650 °C und 1000 °C betrieben und besitzen einen hohen elektrischen Wirkungsgrad. Die Gewährleistung einer langen Lebensdauer der Brennstoffzellen stellt hier das größte Problem dar.

Brennstoffzellensystemen sind zwecks Einbindung in das elektrische Netz mit einem Wechselrichter ausgestattet, welcher den Gleichstrom des Brennstoffzellen-Stacks in netzkonformen Wechselstrom umrichtet. Die im Wechselrichter auftretenden Verluste werden in Form von Abwärme in den Aufstellungsraum abgegeben, wobei dem Aufstellungsraum wiederum die zur Kühlung erforderliche Frischluft entzogen wird. Besonders im Falle eines warmen Aufstellungsortes kann es zur Überhitzung des Wechselrichters bzw. zu einer Leistungsreduktion zur Vermeidung einer solchen Überhitzung kommen.

In einem typischen Brennstoffzellensystem wird ein offener tubularer SOFC-Stack eingesetzt. Dabei erfolgt die (Erd-)Gaszufuhr über einen Verdichter und die Zufuhr des Oxidationsmittels, üblicherweise Luft bzw. Luftsauerstoff, über einen weiteren Verdichter. Im Stack werden beide Komponenten elektrochemisch zu Strom und Wärme umgesetzt. Überschüssiges (Erd-)Gas und überschüssige Luft werden in der Nachbrennzone verbrannt. Das heiße Abgas der Nachbrennzone wird für folgende Zwecke genutzt:
1. zur Verdampfung von Wasser für die Reformierung;
2. zur Versorgung der endothermen Reformierungsreaktion mit Wärme;
3. zur Vorwärmung der für den Brennstoffzellenprozess eingesetzten Luft.

Die danach im Abgas, das nun eine Temperatur zwischen 200 °C und 300 °C besitzt, noch enthaltene Wärme kann an ein Wärmeträgermedium eines Heizkreislaufs abgegeben werden. Bei dem Wärmeträgermedium handelt es sich typischerweise um Heizwasser, das zur Beheizung eines Gebäudes oder zur Warmwasserbereitung dient. Durch Abkühlung des Abgases kann der im Brennstoffzellenprozess als Produkt angefallene Wasserdampf kondensieren und über eine Wasseraufbereitung zurück in den Prozess gebracht werden. Dafür ist allerdings eine ausreichende Abkühlung erforderlich. Dabei besteht die Gefahr einer Überhitzung des Heizkreislaufs, wobei durch Verdampfung ein Überdruck entstehen kann.

Für eine entsprechende Abkühlung des Abgases durch Wärmeübertragung auf den Heizkreislauf schlagen Ströhle et al. (US 6 723 459 B2) eine Kühlung des Heizwassers unter Verwendung der Luftversorgung eines integrierten Spitzenkessels vor. Der Einbau eines Spitzenkessels ist allerdings mit hohem apparativem Aufwand verbunden. Darüber hinaus ist er arbeits- und kostenintensiv.

In DE 10 2010 1260 A1 ist der Aufbau einer Anodenrestgaszirkulation beschrieben. Von Nachteil bei dieser Maßnahme ist, dass sie sich nicht für jedes Stack-Konzept realisieren lässt.

Es ist auch bekannt, zusätzliches Wasser in den Prozess einzubringen, falls die Menge an Kondensat nicht ausreicht. Unvorteilhaft ist hierbei, dass der Anschluss einer Wasserzufuhr einen zusätzlichen Installationsaufwand mit sich bringt. Weiterhin nachteilig ist, dass eine aufwändige Wasseraufbereitung, d. h. eine Deionisation, durchzuführen ist, da beispielsweise Leitungswasser in der Regel höhere Ionenkonzentrationen als Kondensat aufweist und es somit zu Ablagerungen im Verdampfer kommen kann. Insbesondere angesichts der nicht absehbaren Schwankungen in der Wasserqualität gestalten sich Auswahl und Dimensionierung der Filter schwierig.

Der Erfindung liegt die Aufgabe zugrunde, die bestehenden Nachteile des Standes der Technik zu überwinden und eine Brennstoffzellenanlage auf der Basis von Festoxid-Brennstoffzellen zur Verfügung zu stellen, deren Betrieb auch ohne externe Wasserzufuhr gewährleistet ist. Insbesondere soll diese Anlage sich durch eine hohe Lebensdauer der Brennstoffzellen auszeichnen, mit geringem Arbeits-, Kosten- und apparativem Aufwand realisierbar und unabhängig von der Art des Stack-Konzeptes einsetzbar sein. Weiterhin ist es Aufgabe der Erfindung, den Wirkungsgrad zu verbessern.

Erfindungsgemäß wird dies mit den Merkmalen der Patentansprüche 1 und 9 gelöst. Vorteilhafte Weiterbildungen sind den Unteransprüchen 2 bis 8 bzw. 10 bis 13 zu entnehmen.

Ein Brennstoffzellensystem auf der Basis von Festoxid-Brennstoffzellen mit wenigstens einer Brennstoffzelle, die mindestens einen Eingang und mindestens einen Ausgang aufweist, wobei ein Brennstoffzellenabgas vom Ausgang zu einem ersten Wärmeübertrager geführt ist, der in einem Heizkreislauf für ein Wärmeträgermedium angeordnet ist, wobei das Brennstoffzellensystem eine Rückführung für ein Kondensat des Brennstoffzellenabgases aufweist, ist erfindungsgemäß dadurch gekennzeichnet, dass das Brennstoffzellensystem einen zweiten Wärmeübertrager zur Temperierung des Brennstoffzellenabgases oder des Wärmeträgermediums des Heizkreislaufs aufweist, der mit einer Luft-Zuleitung verbunden ist.

Mittels des zweiten Wärmeübertragers erfolgt im Gegensatz zum Stand der Technik ein zusätzlicher Temperierungsschritt, und zwar entweder in Bezug auf das Brennstoffzellenabgas oder das Wärmeträgermedium. Besonders vorteilhaft ist hierbei, dass der zweiten Wärmeübertrager mit einer Luft-Zuleitung verbunden ist. Durch die Zufuhr kalter Luft wird auch bei hoher Rücklauftemperatur des Wärmeträgermediums oder des Abgases immer nicht nur Wärme ausgekoppelt, sondern gleichzeitig auch sichergestellt, dass ausreichend Wasser auskondensiert. Zugleich wird eine Überhitzung des Wärmeträgermediums vermieden.

Eine Ausführungsform des Brennstoffzellensystems sieht vor, dass es ein raumluftunabhängiges Abgassystem aufweist, das mit der Luft-Zuleitung des zweiten Wärmeübertragers verbunden ist.

Im Gegensatz zum Stand der Technik wird die zur Kühlung benötigte Luft hier also nicht dem Aufstellungsraum entnommen. Folglich wärmt sich der Aufstellungsraum nicht unnötig stark auf, was sich insbesondere im Falle eines warmen Aufstellungsortes als vorteilhaft erweist. Durch die Verwendung eines raumluftunabhängigen Abgassystems wird die Gefahr des Überhitzens und damit die Gefahr von überhitzungsbedingten Ausfällen von Bauteilen im Vergleich zum Stand der Technik verringert.

Bevorzugt ist das raumluftunabhängige Abgassystem ein Luft-Abgas-Schornsteinsystem. Der Schornstein dient also gleichzeitig zur Zufuhr von Luft und zur Abfuhr von Abgas. Die Anzahl an Bauelementen wird damit klein gehalten.

In einer weiteren Ausführungsform weist das Brennstoffzellensystem einen Luftverdichter auf, über den Luft der Brennstoffzelle zuführbar ist, und einen weiteren Luftverdichter, der in der Luft-Zuleitung zum zweiten Wärmeübertrager angeordnet ist. Über den zweiten Luftverdichter kann die zum zweiten Wärmeübertrager geführte Luft unabhängig gesteuert werden.

Dabei ist es besonders vorteilhaft, wenn der Weg von einem Lufteintritt des raumluftunabhängigen Abgassystems zu dem Luftverdichter, der in der Luft-Zuleitung zum zweiten Wärmeübertrager angeordnet ist, möglichst kurz gewählt wird, um so ein unnötig starkes Aufwärmen der Luft zu verhindern. Dadurch ist immer eine gute Wärmeaufnahme der Luft sichergestellt.

Ferner sieht das Brennstoffzellensystem vor, dass es einen Wechselrichter aufweist, der einen Kühlkörper hat, der mit der Luft-Zuleitung verbunden ist. Dadurch, dass der Kühlkörper des Wechselrichters mit der Luft-Zuleitung verbunden ist, erübrigt sich eine zusätzliche Kühlung des Wechselrichters gemäß dem Stand der Technik. Somit ist der Aufbau des Brennstoffzellensystems gegenüber dem Stand der Technik deutlich weniger aufwändig und kostenintensiv. Damit steigert sich die Effizienz des Brennstoffzellensystems.

In einer weiteren Ausführungsform des Brennstoffzellensystems ist vorgesehen, dass ein dritter Wärmeübertrager zwischen Brennstoffzellenabgas und Heizkreislauf angeordnet ist. Durch den dritten Wärmeübertrager, der zwischen Brennstoffzellenabgas und Heizkreislauf angeordnet ist, ist ein zweiter Wärmeübertragungspunkt zwischen Brennstoffzellenabgas und Wärmeträgermedium des Heizkreislaufs vorhanden. Für die Wärmeübertragung steht damit eine größere Fläche zur Verfügung.

Für den zweiten Wärmeübertrager ist in einer bevorzugten Ausführungsform des Brennstoffzellensystems vorgesehen, dass er im Brennstoffzellenabgas angeordnet ist, insbesondere nach dem ersten Wärmeübertrager. In einer alternativen Ausführungsform ist der zweite Wärmeübertrager im Heizkreislauf angeordnet, insbesondere vor dem ersten Wärmeübertrager.

Die Tatsache, dass der zweite Wärmeübertrager entweder im Brennstoffzellenabgas oder im Heizkreislauf angeordnet ist, zeigt die Variabilität und Anwendungsbreite des Brennstoffzellensystems.

Eine weitere Ausführungsform des Brennstoffzellensystems sieht vor, dass ein Kondensator in der Rückführung für das Kondensat des Brennstoffzellenabgases angebracht ist. Bevor das Kondensat der Wasseraufbereitung zugeführt wird, können im Kondensator letzte Dampfreste kondensiert werden. Somit wird die Kondensatausbeute weiter erhöht.

In einer weiteren Ausführungsform des Brennstoffzellensystems ist eine Kondensatfalle nach dem ersten Wärmeübertrager oder dem zweiten Wärmeübertrager vorgesehen oder der dritte Wärmeübertrager ist so ausgebildet, dass das Kondensat nicht wieder verdampft. Dies ist besonders vorteilhaft, wenn nach dem ersten oder zweiten Wärmeübertrager ein kühler Punkt erreicht wird, bei dem ausreichend Kondensat anfällt, um den Kondensatvorrat wieder aufzufüllen oder zumindest einen konstanten Pegel an Kondensat im Kondensatspeicher zu gewährleisten. Durch die Kondensatfalle wird ein erneutes Verdampfen des einmal gebildeten Kondensates vermieden.

Das Verfahren zum Betreiben eines erfindungsgemäßen Brennstoffzellensystems ist dadurch gekennzeichnet, dass ein Brennstoffzellenabgas oder ein Wärmeträgermedium eines Heizkreislaufs, die über einen ersten Wärmeübertrager in wärmeübertragender Verbindung stehen, in einem zweiten Wärmeübertrager mit Luft temperiert wird.

Auf Grund des Vorhandenseins eines zweiten, mit einer Luft-Zuleitung verbundenen Wärmeübertragers erfolgt im Gegensatz zum Stand der Technik ein weiterer Temperierungsschritt, und zwar entweder in Bezug auf das Brennstoffzellenabgas oder das Wärmeträgermedium. Beim Betreiben eines derartigen Brennstoffzellensystems wird auch bei hoher Rücklauftemperatur genug Wärme ausgekoppelt, um ausreichend Wasser auszukondensieren. Im Verfahren zum Betreiben eines erfindungsgemäßen Brennstoffzellensystems wird Luft aus einem raumluftunabhängigen Abgassystem über einen Luftverdichter und anschließend über einen Wechselrichter und/oder durch den zweiten Wärmeübertrager geführt.

Auf diese Weise wird das in beliebiger Menge verfügbare Oxidationsmittel Luft bzw. Luftsauerstoff nicht nur für die Brennstoffzellenreaktion genutzt, sondern auch für die Kühlung des Wechselrichters. Im Gegensatz zum Stand der Technik wird die Abluft des Wechselrichters hier also genutzt, und zwar zur Temperierung des Brennstoffzellenabgases oder des Wärmeträgermediums eines Heizkreislaufs. Damit wird eine Verbesserung des Wirkungsgrades des Wechselrichters im Vergleich zum Stand der Technik erzielt.

Eine weitere Ausführungsform des Verfahrens zum Betreiben eines erfindungsgemäßen Brennstoffzellensystems sieht vor, dass das Brennstoffzellenabgas im ersten Wärmeübertrager auf eine erste Temperatur abgekühlt wird und im zweiten Wärmeübertrager auf eine zweite Temperatur gebracht wird, und gegebenenfalls in einem dritten Wärmeübertrager auf eine dritte Temperatur gebracht wird. Es erfolgt also eine mehrstufige Temperierung. Die Temperatur des Brennstoffzellenabgases lässt sich dadurch genau einstellen. Beispielsweise kann sichergestellt werden, dass das Brennstoffzellenabgas zumindest kurzzeitig auf eine Temperatur von höchstens 50 °C abgekühlt wird, so dass eine ausreichende Menge an Kondensat erhalten wird.

Eine weitere Ausführungsform des Verfahrens zum Betreiben eines erfindungsgemäßen Brennstoffzellensystems ist dadurch gekennzeichnet, dass das Wärmeträgermedium im zweiten Wärmeübertrager vortemperiert wird und anschließend durch den ersten Wärmeübertrager geführt wird, wobei das Wärmeträgermedium gegebenenfalls vor dem zweiten Wärmeübertrager durch einen dritten Wärmeübertrager geführt wird, durch den das Brennstoffzellenabgas geführt wird.

Ein Überhitzen des Wärmeträgermediums kann dann beispielsweise durch Wärmeabgabe im zweiten Wärmeübertrager zuverlässig verhindert werden.

In einer weiteren Ausführungsform des Verfahrens zum Betreiben eines erfindungsgemäßen Brennstoffzellensystems wird die zum Luftverdichter geführte Luft zur Temperierung des Wechselrichters verwendet.

Insbesondere bei heißer Umgebungstemperatur im Aufstellungsraum hat die Kühlung des Wechselrichters über das raumluftunabhängige Abgassystem den Vorteil, dass die angesaugte Luft kälter ist. Indirekt wird über das raumluftunabhängige Abgassystem der kalte Rücklauf für die Kühlung des Wechselrichters genutzt.

Weiterhin wird mit dem erfindungsgemäßen Verfahren die Fördermenge des Luftverdichters 16 in Abhängigkeit vom Füllstand des Kondensatspeichers in der Kondensataufbereitung 25 eingestellt. Dabei wird vorzugsweise beim Erreichen einer vorgebbaren unteren Füllstandsschwelle die Luftmenge erhöht.

Insgesamt gelingt mit dem Betreiben eines erfindungsgemäßen Brennstoffzellensystems die Auskopplung von Wärme bei hoher Temperatur, wobei sich gleichzeitig ausreichend viel Kondensat bildet. Damit ist eine externe Wasserzufuhr nicht erforderlich.

Weiterhin wird durch das erfindungsgemäße Verfahren vorteilhafterweise vermieden, dass das Wärmeträgermedium eines Heizkreislauf überhitzt und infolge Verdampfung ein Überdruck entsteht. Folglich ist ein Abschalten der Brennstoffzelle bei kurzzeitigen, d. h. tageweisen, Unterbrechungen des Wärmebedarfs nicht erforderlich, so dass die Lebensdauer nicht negativ beeinflusst wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein erstes Ausführungsbeispiel eines Brennstoffzellensystems,
- Fig. 2: ein zweites Ausführungsbeispiel des Brennstoffzellensystems,
- Fig. 2a: eine Ausgestaltung des zweiten Ausführungsbeispiels des Brennstoffzellensystems,
- Fig. 3: ein drittes Ausführungsbeispiel des Brennstoffzellensystems,
- Fig. 4: ein viertes Ausführungsbeispiel des Brennstoffzellensystems und
- Fig. 5: ein fünftes Ausführungsbeispiel des Brennstoffzellensystems.

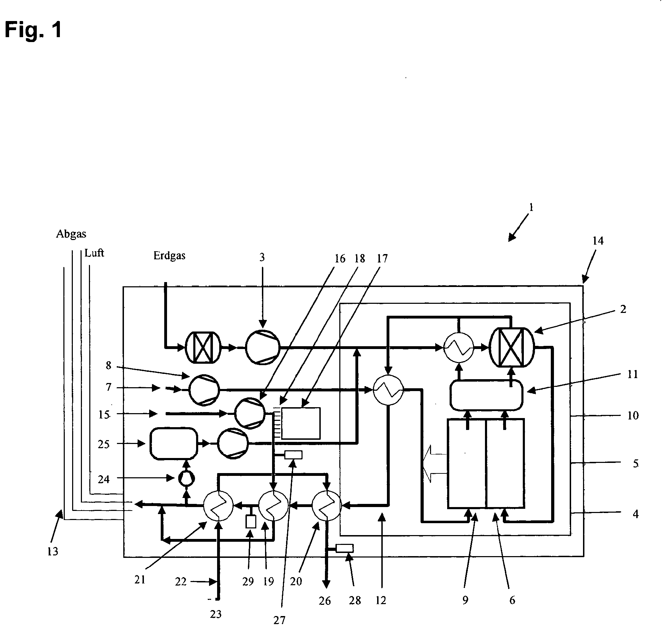

Fig. 1 zeigt ein Fließbild eines erfindungsgemäßen Brennstoffzellensystems 1. Es kann ein offener tubularer SOFC-Stack oder jedes andere SOFC-Stack-Design verwendet werden. Einem Reformer 2 werden Kohlenwasserstoffe, typischerweise Erdgas, über einen Gasverdichter 3 zugeführt. Im Reformer 2 werden Kohlenwasserstoffe mit Wasser in ein Gemisch aus Kohlenmonoxid und Wasserstoff umgewandelt, das dann zu einem Eingang 4 wenigstens einer Brennstoffzelle 5 und von dort in den Anodengasraum 6 der Brennstoffzelle 5 geführt wird. Luft, welche über eine Luft-Zuleitung 7 und einen Luftverdichter 8 zum Eingang 4 und dann in einen Kathodengasraum 9 der Brennstoffzellen 5 zugeführt wird, reagiert in mindestens einer Brennstoffzelle 5 mit dem Kohlenmonoxid/Wasserstoff-Gemisch elektrochemisch zu Wasserdampf und Kohlendioxid, wobei Strom und Wärme frei werden. Überschüssige Kohlenwasserstoffe und überschüssige Luft werden durch mindestens einen Ausgang 10 der Brennstoffzelle 5 in eine Nachbrennzone 11 oder einen Nachbrenner geführt, wo sie verbrannt werden. Heißes Brennstoffzellenabgas 12 der Nachbrennzone 11 wird genutzt, um Wasser für die Reformierung zu verdampfen, die endotherme Reformierungsreaktion mit Wärme zu versorgen und die Luft vorzuwärmen. Danach hat das Brennstoffzellenabgas in der Brennstoffzellenabgasleitung 12 eine Temperatur von etwa 200 °C bis 300 °C.

Im linken Teil von Fig. 1 ist als raumluftunabhängiges Abgassystem 13 ein Luft-Abgas-Schornstein (LAS-System) zu sehen, bei dem im inneren Rohr das Abgas abgeführt wird und im äußeren Raum Frischluft angesaugt wird. Hier kann auch ein anderes raumluftunabhängiges Abgassystem angeordnet sein. Die Luft aus dem raumluftunabhängigen Abgassystem 13 wird in einen Luftkasten 14 geführt. Der Luftkasten 14 ist hier exemplarisch gezeichnet und kann auch mehr oder weniger Teile des Systems enthalten.

Im erfindungsgemäßen Brennstoffzellensystem 1 wird Luft nicht nur vom Luftverdichter 8 in die Kathode 9 der Brennstoffzellen 5 gefördert, sondern auch über eine weitere Luft-Zuleitung 15 und einen weiteren Luftverdichter 16 und über einen Wechselrichter 17 bzw. über dessen Kühlkörper 18. Hierbei ist es besonders vorteilhaft, den Weg vom Luftaustritt aus dem raumluftunabhängigen Abgassystem 13 zum Luftverdichter 16 möglichst kurz zu wählen, damit sich die Luft nicht unnötig stark aufwärmt. Die Abluft des Wechselrichters 17 wird durch einen zweiten Wärmeübertrager 19 geführt, welcher im Abgaspfad zwischen einem ersten Wärmeübertrager 20 und einem dritten Wärmeübertrager 21 angeordnet ist. Das Brennstoffzellenabgas 12 wird im ersten Wärmeübertrager 20 in einem ersten Schritt abgekühlt, beispielsweise von 300 °C auf 40 °C. Danach passiert es den zweiten Wärmeübertrager 19, in dem es durch die Abwärme des Wechselrichters 17 wieder aufgewärmt wird, beispielsweise auf 45 °C. Die verbleibende Wärme wird im dritten Wärmeübertrager 21 an das Wärmeträgermedium des Heizkreislaufs 22 abgegeben. Das Wärmeträgermedium erwärmt sich dadurch z.B. von 30 °C auf 35 °C, während das Brennstoffzellenabgas auf 30 °C abgekühlt ist. Das aus dem zweiten Wärmeübertrager 19 austretende Brennstoffzellenabgas 12 kommt im dritten Wärmeübertrager 21 in Kontakt mit dem kältesten Punkt des Systems, dem Rücklauf 23 des Heizkreislaufs 22. Somit wird das Brennstoffzellenabgas 12 so weit wie möglich abgekühlt. Die dabei eintretende Kondensation erlaubt die Nutzung des Kondensats und gleichzeitig die Nutzung des Brennwerteffekts zur Verbesserung des Wirkungsgrads. Das Brennstoffzellenabgas 12 aus dem dritten Wärmeübertrager 21 und die aus dem zweiten Wärmeübertrager 19 abgeführte Luft werden zusammen an das raumluftunabhängige Abgassystem 13 abgegeben.

In Fig. 1 sind die Temperaturen für einen kalten Rücklauf 23 angegeben. In diesem Fall wird der Luftverdichter 16 so betrieben, dass der Luftdurchfluss möglichst gering ist und die höchste zulässige Temperatur im Wechselrichter 17, z. B. 60 °C, auftritt. Die Drehzahl des Luftverdichters 16 wird über eine Temperaturmessstelle 27, die nach dem Wechselrichter 17 angeordnet ist, geregelt.

Im dritten Wärmeübertrager 21 und ggf. auch im zweiten 19 kondensiert das Produktwasser..Das dabei entstehende Kondensat wird nach dem Wärmeübertrager 21 in einem nicht dargestellten Abscheider abgeschieden. Das Kondensat wird z. B. mit einer Pumpe 24 einer Kondensataufbereitung 25 zugeführt. Die Kondensataufbereitung 25 weist mindestens einen Kondensatspeicher auf, in dem je nach Konzept Kondensat oder deionisiertes Wasser gespeichert wird. So lange ein ausreichend hoher Füllstand in diesem Speicher vorhanden ist, kann der in Fig. 1 illustrierte Modus beibehalten werden.

In diesem Betriebszustand wird die Abwärme des Wechselrichters 17 über den zweiten Wärmeübertrager 19 zunächst an das Brennstoffzellenabgas 12, das aus dem ersten Wärmeübertrager 20 austritt, übertragen und von dort über den dritten Wärmeübertrager 21 auf das Wärmeträgermedium des Heizkreislaufs 22. Bei heißer Umgebungstemperatur im Aufstellungsraum hat die Kühlung des Wechselrichters 17 über das raumluftunabhängige Abgassystem 13 den Vorteil, dass die angesaugte Luft kälter als die im Aufstellungsraum vorhandene ist. Indirekt wird hier die Abwärme des Wechselrichters an das Heizsystem abgegeben.

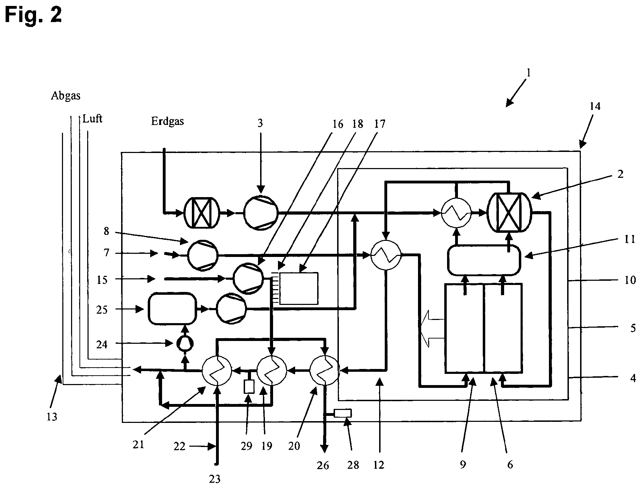

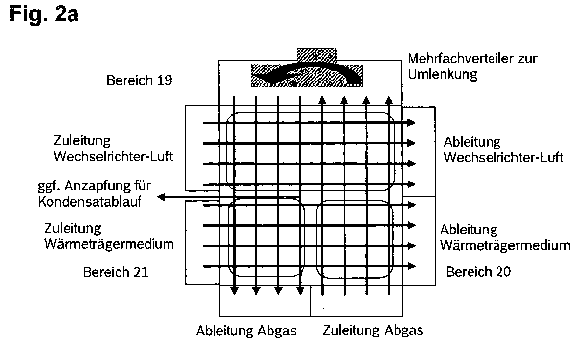

Weist der Kondensatspeicher einen zu geringen Füllstand auf, so ist davon zugehen, dass auf Grund einer zu hohen Temperatur des Rücklaufes 23 kein Kondensat gebildet werden kann. In diesem Fall wird der Luftverdichter 16 auf volle Leistung geregelt, so dass sich die Luft im Wechselrichter 17 nur noch unwesentlich erwärmt. Dieser Betriebsfall ist in Fig. 2 dargestellt.

In dem in Fig. 2 gezeigten Fließbild wird das Brennstoffzellenabgas 12 im ersten Wärmeübertrager 20 in einem ersten Schritt abgekühlt, beispielsweise von 300 °C auf 80 °C. Danach wird es im zweiten Wärmeübertrager 19 so weit abgekühlt, dass es dem Wärmeträgermedium des Heizkreislaufs 22 im dritten Wärmeübertrager 21 so viel Wärme entnehmen kann, wie im ersten Wärmeübertrager 20 wieder zugeführt wird. Nach dem zweiten Wärmeübertrager 19 ist das Brennstoffzellenabgas beispielsweise von 80 °C auf 35 °C abgekühlt. Damit ist eine Temperatur erreicht, bei der ausreichend Kondensat gebildet wird, um den Kondensatvorrat wieder aufzufüllen oder zumindest den Pegel im Kondensatspeicher konstant zu halten. Dazu ist eine nicht dargestellte Kondensatfalle nach dem zweiten Wärmeübertrager 19 erforderlich, oder der dritte Wärmeübertrager 21 muss konstruktiv so gestaltet sein, dass ein Verdampfen des Kondensats möglichst verhindert wird. Dies kann z. B. durch mindestens eine Rinne im unteren Teil des Wärmeübertragers erfolgen, womit die Kontaktfläche von Wasser zu Gas minimiert wird. Im dritten Wärmeübertrager 21 nimmt das Brennstoffzellenabgas Wärme aus dem Wärmeträgermedium des Heizkreislaufs 22 auf, wobei sich das Brennstoffzellenabgas von 35 °C auf 80 °C erwärmt, während das Wärmeträgermedium des Heizkreislaufs von 80 °C auf 40 °C abgekühlt ist.

Eine Regelung sollte so erfolgen, dass weder die maximale Speicherladetemperatur bei einer Temperaturmessstelle 28 (z. B. 90 °C), die hinter dem ersten Wärmeübertrager 20, d. h. im Ablauf 26 des Heizkreislaufs 22, angeordnet ist, noch die zur Kondensation erforderliche Temperatur bei einer Temperaturmessstelle 29, die im Brennstoffzellenabgas 12 zwischen dem zweiten Wärmeübertrager 19 und dem dritten Wärmeübertrager 21 angeordnet ist, überschritten wird.

Diesem Betriebszustand kommt zugute, dass eine hohe Temperatur des Rücklaufs 23 immer dann auftritt, wenn der Wärmebedarf gering ist. Eine wärmegeführte oder -orientierte Betriebsweise wird dann eine Leistungsreduktion der Brennstoffzelle 5 bewirken. Dadurch sinken die Wärmeabgabe des Wechselrichters 17 und des SOFC-Stacks.

Fig. 2a zeigt eine Ausgestaltung des in Fig. 2 illustrierten Ausführungsbeispiels, bei der die Wärmeübertrager 19, 20, 21 in einem einzigen Plattenwärmeübertrager integriert sind. Dabei werden der Wärmeträgermedium- und Wechselrichter-Kühlluft-Strom in gemeinsamen Ebenen und der Abgasstrom in den anderen Ebenen im Wechsel kreuzweise zugeführt. Die Umlenkung kann auch innerhalb der Platte in der Kanalstruktur des Wärmeübertragers erfolgen. Die Zu- und Ableitungen erfolgen z. B. in Form von Mehrfachverteilern.

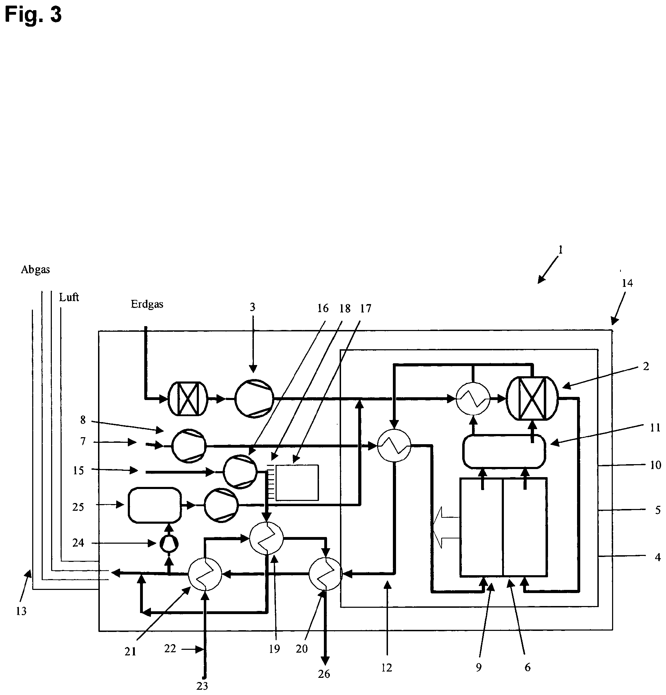

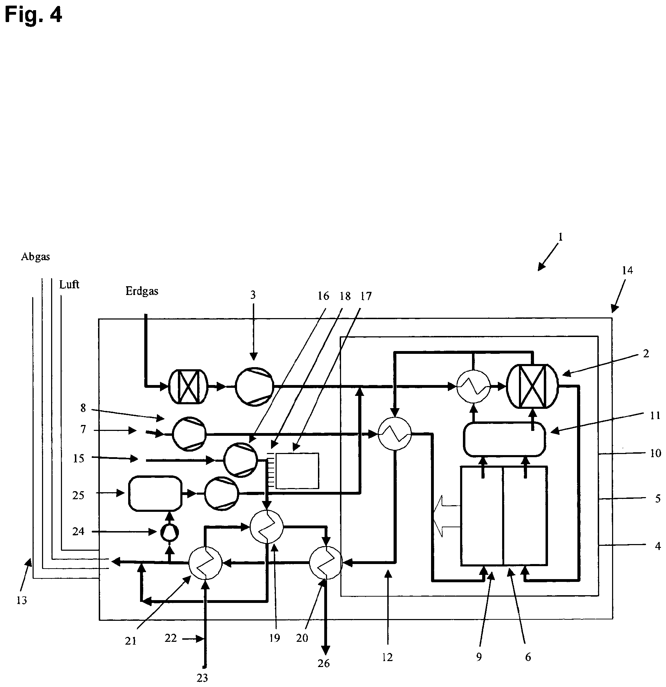

Alternativ zu Fig. 1 und Fig. 2 kann die Abluft des Wechselrichters 17 auch in das Wärmeträgermedium des Heizkreislaufs 22 eingekoppelt werden. Dies ist in Fig. 3 und Fig. 4 gezeigt. Dann wird der zweite Wärmeübertrager 19 im Heizkreislauf 22 angeordnet. In Fig. 3 wird das Brennstoffzellenabgas 12 in zwei Schritten über den ersten Wärmeübertrager 20 und den dritten Wärmeübertrager 21 abgekühlt. Dabei wird das Brennstoffzellenabgas 12 im ersten Wärmeübertrager 20 beispielsweise zunächst von 300 °C auf 100 °C abgekühlt. Im dritten Wärmeübertrager 21 wird das Brennstoffzellenabgas 12 dann beispielsweise von 100 °C auf 30 °C abgekühlt, während das Wärmeträgermedium des Heizkreislaufs 22 von 30 °C auf 40 °C erwärmt wird. Im zweiten Wärmeübertrager 19 wird das Wärmeträgermedium des Heizkreislaufs 22 durch die Abwärme des Wechselrichters 17 von 40 °C auf 43°C erwärmt. Danach wird das Wärmeträgermedium durch den ersten Wärmeübertrager 20 geführt, wobei es von 43 °C auf 60 °C erwärmt wird.

Im Kühlfall nach Fig. 4, d. h. bei hoher Temperatur des Rücklaufs 23, wird das Wärmeträgermedium des Heizkreislaufs 22 über den dritten Wärmeübertrager 21 und den zweiten Wärmeübertrager 19 so weit abgekühlt, dass es in der Lage ist, im ersten Wärmeübertrager 20 erneut erwärmt zu werden, um die Temperatur zu erreichen, die das Wärmeträgermedium des Heizkreislaufs 22 vor Durchströmen des dritten Wärmeübertragers 21 aufwies. Um eine derartig hohe Kühlleistung zu erzielen, ist wie bereits in Fig. 2 gezeigt der Volumenstrom durch den Luftverdichter 16 deutlich zu erhöhen. Im ersten Wärmeübertrager 20 entzieht das zuvor gekühlte Wärmeträgermedium des Heizkreislaufs 22 dem Brennstoffzellenabgas 12 Wärme und kühlt es dabei so weit ab, dass Kondensation eintritt.

Das Wärmeträgermedium des Heizkreislaufs 22 wird beispielsweise im zweiten Wärmeübertrager 19 von 45 °C auf 35 °C abgekühlt. Danach passiert das Wärmeträgermedium den ersten Wärmeübertrager 20, wobei es von 35 °C auf 80 °C erwärmt wird, während das Brennstoffzellenabgas 12 von 300 °C auf 45 °C abkühlt. Im dritten Wärmeübertrager 21 nimmt das Brennstoffzellenabgas 12 Wärme vom Wärmeträgermedium des Heizkreislaufs 22 auf. Dabei wird das Brennstoffzellenabgas 12 von 45 °C auf 80 °C erwärmt, während das Wärmeträgermedium von 80 °C auf 45 °C abkühlt.

In der Anordnung in Fig. 4 ist eine Kondensatfalle (nicht gezeigt) nach dem ersten Wärmeübertrager 20 erforderlich, um das hier anfallende Kondensat für die Kondensataufbereitung 25 aufzufangen, oder der dritte Wärmeübertrager 21 muss so ausgelegt sein, dass das Kondensat hindurchfließen kann, ohne wieder zu verdampfen. Die Varianten aus Fig. 2 und Fig. 4 können auch ohne Einbindung des Wechselrichters 17 aufgebaut werden. Dann wird die Luft nur zur Kühlung des Brennstoffzellenabgases 12 genutzt, um genug Kondensat aufzufangen und den Kondensatspeicher nicht zu überhitzen. Der Wechselrichter 17 ist dann mit einer Kühlung aus dem Stand der Technik zu betreiben.

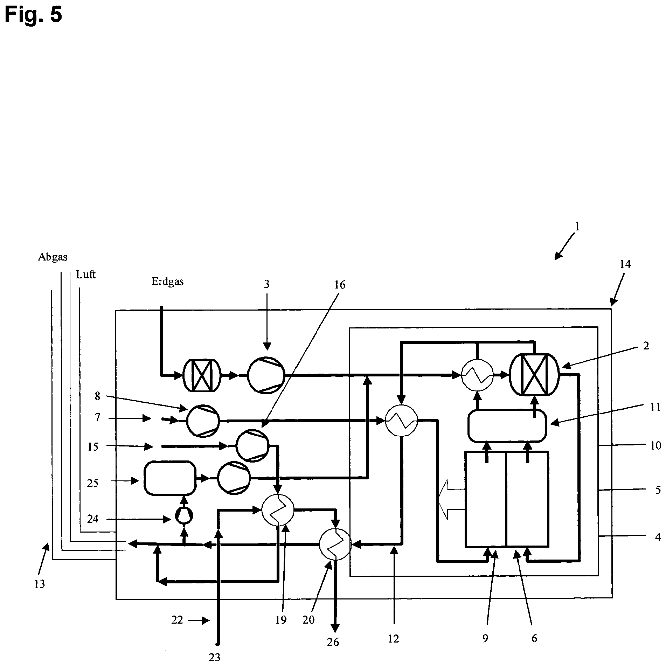

Alternativ zu Fig. 4 ist auch der in Fig. 5 gezeigte, vereinfachte Aufbau möglich. Dabei ist eine höhere Kühlleistung erforderlich, da das Wärmeträgermedium des Heizkreislaufs 22 vor Eintritt in den zweiten Wärmeübertrager 19 noch keine Wärme an das Brennstoffzellenabgas 12 übertragen konnte. Im zweiten Wärmeübertrager 19 wird das Wärmeträgermedium des Heizkreislaufs 22 beispielsweise von 80 °C auf 35 °C abgekühlt, bevor es den ersten Wärmeübertrager 20 passiert. Dabei wird das Wärmeträgermedium von 35 °C auf 80 °C erwärmt, während das Brennstoffzellenabgas von 300 °C auf 45 °C abkühlt.

Durch das erfindungsgemäße Brennstoffzellensystem wird erreicht, dass gleichzeitig Wärme bei hoher Temperatur ausgekoppelt und ausreichend Wasser auskondensiert werden kann. Dabei wird vermieden, dass das Heizwasser überhitzt und durch Verdampfung ein Überdruck entsteht. Außerdem wird eine Überhitzung des Abgassystems vermieden. So muss die Brennstoffzelle bei kurzzeitigen (tageweisen) Unterbrechungen des Wärmebedarfs nicht abgeschaltet werden, was die Lebensdauer negativ beeinträchtigen würde.

## Patentansprüche

1. Brennstoffzellensystem (1) auf der Basis von Festoxid-Brennstoffzellen mit wenigstens einer Brennstoffzelle (5), die mindestens einen Eingang (4) und mindestens einen Ausgang (10) aufweist, wobei ein Brennstoffzellenabgas (12) vom Ausgang (10) zu einem ersten Wärmeübertrager (20) geführt ist, der in einem Heizkreislauf (22) für ein Wärmeträgermedium angeordnet ist, wobei das Brennstoffzellensystem (1) eine Rückführung für ein Kondensat des Brennstoffzellenabgases (12) aufweist, wobei das Brennstoffzellensystem (1) einen zweiten Wärmeübertrager (19) zur Temperierung des Brennstoffzellenabgases (12) oder des Wärmeträgermediums des Heizkreislaufs (22) aufweist, der mit einer Luft-Zuleitung (15) verbunden ist, **dadurch gekennzeichnet, dass** es einen Wechselrichter (17) aufweist, der einen Kühlkörper (18) hat, der mit der Luft-Zuleitung (15) verbunden ist.

2. Brennstoffzellensystem gemäß Anspruch 1,
**dadurch gekennzeichnet, dass** das Brennstoffzellensystem (1) ein raumluftunabhängiges Abgassystem (13) aufweist, das mit der Luft-Zuleitung (15) des zweiten Wärmeübertragers (19) verbunden ist.

3. Brennstoffzellensystem gemäß Anspruch 1 oder 2,
**dadurch gekennzeichnet, dass** das Brennstoffzellensystem (1) einen Luftverdichter (8), über den Luft der Brennstoffzelle (5) zuführbar ist, und einen Luftverdichter (16) aufweist, der in der Luft-Zuleitung (15) zum zweiten Wärmeübertrager (19) angeordnet ist.

4. Brennstoffzellensystem gemäß einem der Ansprüche 1 bis 3,
**dadurch gekennzeichnet, dass** ein dritter Wärmeübertrager (21) zwischen Brennstoffzellenabgas (12) und Heizkreislauf (22) angeordnet ist.

5. Brennstoffzellensystem gemäß einem der Ansprüche 1 bis 4,
**dadurch gekennzeichnet, dass** der zweite Wärmeübertrager (19) im Brennstoffzellenabgas (12) angeordnet ist, insbesondere nach dem ersten Wärmeübertrager (20).

6. Brennstoffzellensystem gemäß einem der Ansprüche 1 bis 4,
**dadurch gekennzeichnet, dass** der zweite Wärmeübertrager (19) im Heizkreislauf (22) angeordnet ist, insbesondere vor dem ersten Wärmeübertrager (20).

7. Brennstoffzellensystem gemäß einem der Ansprüche 1 bis 6,
**dadurch gekennzeichnet, dass** ein Kondensator (24) in der Rückführung für das Kondensat des Brennstoffzellenabgases (12) angebracht ist.

8. Brennstoffzellensystem gemäß einem der Ansprüche 1 bis 7,
**dadurch gekennzeichnet, dass** eine Kondensatfalle nach dem ersten Wärmeübertrager (20) oder dem zweiten Wärmeübertrager (19) vorgesehen ist oder der dritte Wärmeübertrager (21) so ausgebildet ist, dass das Kondensat nicht wieder verdampft.

9. Verfahren zum Betreiben eines Brennstoffzellensystems gemäß wenigstens einem der Ansprüche 1 bis 8,
**dadurch gekennzeichnet, dass** ein Brennstoffzellenabgas (12) oder ein Wärmeträgermedium eines Heizkreislaufs (22), die über einen ersten Wärmeübertrager (20) in wärmeübertragender Verbindung stehen, in einem zweiten Wärmeübertrager (19) mit Luft temperiert wird, wobei die zum Luftverdichter (16) geführte Luft zur Temperierung des Wechselrichters (17) verwendet wird.

10. Verfahren gemäß Anspruch 9,
**dadurch gekennzeichnet, dass** Luft aus einem raumluftunabhängigen Abgassystem (13) über einen Luftverdichter (16) und anschließend über einen Wechselrichter (17) und/oder durch den zweiten Wärmeübertrager (19) geführt wird.

11. Verfahren gemäß Anspruch 9 oder 10,
**dadurch gekennzeichnet, dass** das Brennstoffzellenabgas (12) im ersten Wärmeübertrager (20) auf eine erste Temperatur abgekühlt wird und im zweiten Wärmeübertrager (19) auf eine zweite Temperatur gebracht wird, und gegebenenfalls in einem dritten Wärmeübertrager (21) auf eine dritte Temperatur gebracht wird.

12. Verfahren gemäß Anspruch 10 oder 11,
**dadurch gekennzeichnet, dass** das Wärmeträgermedium im zweiten Wärmeübertrager (19) vortemperiert wird und anschließend durch den ersten Wärmeübertrager (20) geführt wird, wobei das Wärmeträgermedium gegebenenfalls vor dem zweiten Wärmeübertrager (19) durch einen dritten Wärmeübertrager (21) geführt wird, durch den das Brennstoffzellenabgas (12) geführt wird.

13. Verfahren gemäß einem der Ansprüche 10 bis 12,
**dadurch gekennzeichnet, dass** die Fördermenge des Luftverdichters (16) in Abhängigkeit vom Füllstand des Kondensatspeichers in der Kondensataufbereitung (25) eingestellt wird, wobei beim Erreichen einer vorgebbaren unteren Füllstandsschwelle die Luftmenge erhöht wird.

## Claims

1. Fuel cell system (1) based on solid oxide fuel cells, comprising at least one fuel cell (5) which has at least one inlet (4) and at least one outlet (10), wherein a fuel cell exhaust gas (12) is guided from the outlet (10) to a first heat exchanger (20), which heat exchanger is arranged in a heating circuit (22) for a heat transfer medium, wherein the fuel cell system (1) has a return passage for a condensate of the fuel cell exhaust gas (12), wherein the fuel cell system (1) has a second heat exchanger (19) for controlling the temperature of the fuel cell exhaust gas (12) or of the heat transfer medium of the heating circuit (22), which heat exchanger is connected to an air supply line (15), **characterized in that** said fuel cell system has an inverter (17) which has a cooling body (18) which is connected to the air supply line (15).

2. Fuel cell system according to Claim 1, **characterized in that** the fuel cell system (1) has a room-air-independent exhaust gas system (13) which is connected to the air supply line (15) of the second heat exchanger (19).

3. Fuel cell system according to Claim 1 or 2, **characterized in that** the fuel cell system (1) has an air compressor (8), via which air can be supplied to the fuel cell (5), and an air compressor (16), which is arranged in the air supply line (15) to the second heat exchanger (19).

4. Fuel cell system according to one of Claims 1 to 3,
**characterized in that** a third heat exchanger (21) is arranged between the fuel cell exhaust gas (12) and the heating circuit (22).

5. Fuel cell system according to one of Claims 1 to 4,
**characterized in that** the second heat exchanger (19) is arranged in the fuel cell exhaust gas (12), in particular downstream of the first heat exchanger (20).

6. Fuel cell system according to one of Claims 1 to 4,
**characterized in that** the second heat exchanger (19) is arranged in the heating circuit (22), in particular upstream of the first heat exchanger (20).

7. Fuel cell system according to one of Claims 1 to 6,
**characterized in that** a condenser (24) is fitted in the return passage for the condensate of the fuel cell exhaust gas (12).

8. Fuel cell system according to one of Claims 1 to 7,
**characterized in that** a condensate trap is provided downstream of the first heat exchanger (20) or the second heat exchanger (19), or the third heat exchanger (21) is designed in such a manner that the condensate does not evaporate again.

9. Method for operating a fuel cell system according to at least one of Claims 1 to 8,
**characterized in that** a fuel cell exhaust gas (12) or a heat transfer medium of a heating circuit (22), which gas and medium are connected in a heat-transferring manner via a first heat exchanger (20), is temperature-controlled in a second heat exchanger (19) using air, wherein the air which is guided to the air compressor (16) and which serves for controlling the temperature of the inverter (17) is used.

10. Method according to Claim 9,
**characterized in that** air from a room-air-independent exhaust gas system (13) is guided via an air compressor (16) and subsequently via an inverter (17) and/or through the second heat exchanger (19).

11. Method according to Claim 9 or 10,
**characterized in that** the fuel cell exhaust gas (12) is cooled down to a first temperature in the first heat exchanger (20) and is brought to a second temperature in the second heat exchanger (19), and if appropriate is brought to a third temperature in a third heat exchanger (21).

12. Method according to Claim 10 or 11,
**characterized in that** the heat transfer medium undergoes preliminary temperature control in the second heat exchanger (19) and is subsequently guided through the first heat exchanger (20), wherein, upstream of the second heat exchanger (19), the heat transfer medium is if appropriate guided through a third heat exchanger (21) through which the fuel cell exhaust gas (12) is guided.

13. Method according to one of Claims 10 to 12,
**characterized in that** the delivery quantity of the air compressor (16) is set in dependence on the fill level of the condensate store in the condensate treatment unit (25), wherein the air quantity is increased if a predefinable lower fill level threshold is reached.

## Revendications

1. Système de piles à combustible (1) à base de piles à combustible à oxyde solide avec au moins une pile à combustible (5), qui présente au moins une entrée (4) et au moins une sortie (10), dans lequel un gaz d'échappement de pile à combustible (12) est conduit de la sortie (10) à un premier échangeur de chaleur (20), qui est disposé dans un circuit de chauffage (22) pour un fluide caloporteur, dans lequel le système de piles à combustible (1) présente un recyclage pour un condensat du gaz d'échappement de pile à combustible (12), dans lequel le système de piles à combustible (1) présente un deuxième échangeur de chaleur (19) pour l'équilibrage de la température du gaz d'échappement de pile à combustible (12) ou du fluide caloporteur du circuit de chauffage (22), qui est relié à une conduite d'arrivée d'air (15), **caractérisé en ce qu'**il présente un onduleur (17), qui comporte un corps de refroidissement (18) qui est relié à la conduite d'arrivée d'air (15).

2. Système de piles à combustible selon la revendication 1, **caractérisé en ce que** le système de piles à combustible (1) présente un système de gaz d'échappement (13) indépendant de l'air atmosphérique, qui est relié à la conduite d'arrivée d'air (15) du deuxième échangeur de chaleur (19).

3. Système de piles à combustible selon la revendication 1 ou 2, **caractérisé en ce que** le système de piles à combustible (1) présente un compresseur d'air (8), par lequel de l'air peut être fourni à la pile à combustible (5), et un compresseur d'air (16), qui est disposé dans la conduite d'arrivée d'air (15) vers le deuxième échangeur de chaleur (19).

4. Système de piles à combustible selon l'une quelconque des revendications 1 à 3, **caractérisé en ce qu'**un troisième échangeur de chaleur (21) est disposé entre le gaz d'échappement de pile à combustible (12) et le circuit de chauffage (22).

5. Système de piles à combustible selon l'une quelconque des revendications 1 à 4, **caractérisé en ce que** le deuxième échangeur de chaleur (19) est disposé dans le gaz d'échappement de pile à combustible (12), en particulier après le premier échangeur de chaleur (20).

6. Système de piles à combustible selon l'une quelconque des revendications 1 à 4, **caractérisé en ce que** le deuxième échangeur de chaleur (19) est disposé dans le circuit de chauffage (22), en particulier avant le premier échangeur de chaleur (20).

7. Système de piles à combustible selon l'une quelconque des revendications 1 à 6, **caractérisé en ce qu'**un condenseur (24) est installé dans le recyclage pour le condensat du gaz d'échappement de pile à combustible (12).

8. Système de piles à combustible selon l'une quelconque des revendications 1 à 7, **caractérisé en ce qu'**il est prévu un piège à condensat après le premier échangeur de chaleur (20) ou le deuxième échangeur de chaleur (19) ou le troisième échangeur de chaleur (21) est configuré de telle manière que le condensat ne se vaporise pas de nouveau.

9. Procédé de conduite d'un système de piles à combustible selon l'une quelconque des revendications 1 à 8, **caractérisé en ce que** l'on équilibre la température d'un gaz d'échappement de pile à combustible (12) ou d'un fluide caloporteur d'un circuit de chauffage (22), qui sont en liaison de transfert de chaleur au moyen d'un premier échangeur de chaleur (20), avec de l'air dans un deuxième échangeur de chaleur (19), dans lequel on utilise l'air fourni au compresseur d'air (16) pour l'équilibrage de la température de l'onduleur (17).

10. Procédé selon la revendication 9, **caractérisé en ce que** l'on conduit de l'air provenant d'un système de gaz d'échappement (13) indépendant de l'air atmosphérique via un compresseur d'air (16) et ensuite via un onduleur (17) et/ou à travers le deuxième échangeur de chaleur (19).

11. Procédé selon la revendication 9 ou 10, **caractérisé en ce que** l'on refroidit le gaz d'échappement de pile à combustible (12) à une première température dans le premier échangeur de chaleur (20) et on le porte à une deuxième température dans le deuxième échangeur de chaleur (19), et éventuellement on le porte à une troisième température dans un troisième échangeur de chaleur (21).

12. Procédé selon la revendication 10 ou 11, **caractérisé en ce que** l'on équilibre d'abord la température du fluide caloporteur dans le deuxième échangeur de chaleur (19) et on le conduit ensuite à travers le premier échangeur de chaleur (20), dans lequel on conduit éventuellement le fluide caloporteur avant le deuxième échangeur de chaleur (19) à travers un troisième échangeur de chaleur (21), à travers lequel on conduit le gaz d'échappement de pile à combustible (12).

13. Procédé selon une des revendications 10 à 12, **caractérisé en ce que** l'on règle le débit du compresseur d'air (16) en fonction du niveau de remplissage du réservoir de condensat dans la préparation de condensat (25), dans lequel on augmente le débit d'air lorsque l'on atteint un seuil de remplissage inférieur prévisible.
